Europäisches Patentamt

European Patent Office

Office européen des brevets

(19)

(11) Numéro de publication : **0 057 138**
**B1**

(12)

# FASCICULE DE BREVET EUROPÉEN

(45) Date de publication du fascicule du brevet :
30.07.86

(21) Numéro de dépôt : 82400111.9

(22) Date de dépôt : 21.01.82

(51) Int. Cl.⁴ : **B 64 G   1/38,** G 01 C 25/00

(54) Système permettant la détermination des phénomènes de résonance de corps en rotation.

(30) Priorité : 22.01.81 FR 8101135

(43) Date de publication de la demande :
04.08.82 Bulletin 82/31

(45) Mention de la délivrance du brevet :
30.07.86 Bulletin 86/31

(84) Etats contractants désignés :
AT BE CH DE GB IT LI LU NL SE

(56) Documents cités :
FR-A- 2 064 411
US-A- 4 193 570
PROCEEDINGS OF THE NAT. ELECTRIC CONFE-
RENCE, vol. 24, 1968, 9/11 décembre 1968, OAK
BROOK ILLINOIS (US), D.F. SELLERS et al. "A vibrating momentum exchange device", pages 48-51

(73) Titulaire : CENTRE NATIONAL D'ETUDES SPATIALES
129, Rue de l'Université
F-75007 Paris (FR)

(72) Inventeur : Assemat, David Joseph Pierre
14, Impasse des Hirondelles
F-31240 l'Union (FR)
Inventeur : Marce, Jean-Louis
Sollner Strasse 2A
D-8000 Munich 71 (DE)

(74) Mandataire : Loyer, Bertrand et al
Cabinet Pierre Loyer 18, rue de Mogador
F-75009 Paris (FR)

## Description

L'invention se rapporte à un procédé de détermination des phénomènes de résonances produit par des corps en rotation tels que des réceptacles porteurs de liquides dissipant une certaine énergie interne et au dispositif de mise en œuvre.

La détermination du rapport d'inertie équivalent Iz/Ix où Iz est le moment d'inertie équivalent principal par rapport à l'axe de rotation IZ du système et Ix le moment d'inertie équivalent principal par rapport à l'axe IX perpendiculaire à IZ, ou du rapport Iz/Iy où IY est perpendiculaire à ZIX ou bien encore du rapport d'inertie équivalent Iz/It, It désignant l'inertie par rapport à un axe quelconque du plan perpendiculaire en I à Iz, est une démarche essentielle dans l'étude de la stabilité d'un système comportant des masses en mouvement comme les liquides notamment, le point I désignant le centre de gravité.

C'est ainsi par exemple que si l'on est amené à prévoir un dispositif d'amortissement des phénomènes de nutation provoqués par les déplacements des liquides contenus dans un satellite que l'on désire stabiliser dans sa rotation autour d'un axe pendant une durée déterminée il faut étudier les conditions permettant à un tel dispositif de consommer une énergie minimum.

Cependant une telle étude nécessite des vérifications expérimentales sur modèle que l'on ne peut conduire de façon efficace qu'en faisant varier divers facteurs et notamment l'un des plus importants le rapport Iz/Ix ou Iy ou Iz/It.

Un moyen d'accéder à une telle expérimentation consiste à faire tourner le modèle à étudier dans un caisson hermétique dans lequel on abaisse la pression à un torr. Le modèle que l'on anime d'un mouvement de rotation autour de son axe IZ, repose par une bille sur un palier assurant à l'axe du système la possibilité de se déplacer sur trois degrés de liberté, son centre de gravité I étant fixe. De tels mouvements connus sous le nom de mouvement à la Euler Poinsot peuvent être réalisés notamment au moyen d'une bille sphérique supportant une table sur laquelle on fixe le système à étudier, la calotte sphérique inférieure correspondant par exemple à une demi-sphère reposant sur un film d'azote entre cette calotte et une coupe sphérique fixée au bâti de la chambre hermétique.

Ayant équilibré la table pour que son centre de gravité coïncide avec le centre de la sphère et disposant de moyens de télécommande et de mesure on peut faire varier la vitesse de rotation de la table autour de son axe et déterminer le mouvement perturbé de rotation en résultant en fonction des mouvements du liquide du système à étudier.

Les mesures des moments d'inertie transverse Ix ou Iy ou It sont effectuées par une méthode pendulaire par exemple et le moment d'inertie de la table par rapport à son axe de rotation est effectué avant mise en place des liquides par simple mesure d'oscillations au moyen de ressorts calibrés.

L'expérience montre que bien que l'on puisse contrôler les changements très faibles de vitesse de la table on ne peut se dispenser, compte tenu de l'importance fondamentale du rapport d'inertie dans la détermination du degré d'instabilité d'un corps en rotation, d'effectuer une suite d'expériences en faisant varier les valeurs de ce paramètre autour de sa valeur nominale.

On était donc amené à modifier le rapport d'inertie de la structure tournante par adjonction de masses fixes à la structure tournante initiale. Cependant étant donné les nombreux paramètres mis en jeu il était nécessaire en dépit de ces variations de la masse de maintenir la position de son centre de gravité et de respecter l'équilibre statique de la structure tournante ainsi que son équilibre dynamique.

A de telles opérations obligatoirement assez longues, de l'ordre de 3 heures, s'ajoutait celle de la mesure sous vide dans le caisson contenant la structure tournante afin d'éviter tous effets aérodynamiques, la durée de cette dernière opération étant de l'ordre de 1 h 1/2. L'essai proprement dit d'une demi heure comprenait la mise en rotation de la structure, puis son observation par la mesure des nutations observées, la récupération de la structure en fin d'essai nécessitant 1/2 heure.

Pour effectuer une nouvelle expérience, il fallait en conséquence revenir à la pression atmosphérique, ouvrir le caisson nécessitant une nouvelle perte de temps d'une heure puis effectuer la mise en place des masses additionnelles destinées à modifier la valeur du rapport d'inertie consiréré — d'où une nouvelle perte de temps de 3 heures.

Bien que cette solution permette de déceler certains phénomènes de résonance elle se révèle non seulement trop longue environ une journée par expérience mais encore inefficace dans la recherche des résonnances aiguës dues aux comportements des masses liquides contenues dans la structure flottante, les variations du rapport d'inertie ne pouvant s'effectuer que de façon discrète et avec l'inconvénient d'alourdir la structure à chaque incrément.

Ainsi, on était dans l'impossibilité d'effectuer des variations fixes du rapport d'inertie inférieures à une variation de l'ordre de 0,05, notamment en raison de l'impossibilité d'obtenir une valeur prédéterminée précise compte tenu des contraintes d'implantation des masses additionnelles.

Pour déterminer la réaction dynamique d'une structure tournante en raison de la dissipation d'énergie interne des corps qu'elle comporte, le document US-A-4 193 570 a proposé une structure tournant autour d'un axe de rotation passant par son centre de gravité, l'axe ayant trois degrés de liberté, un volant d'inertie rotatif étant adjoint à la structure tournante. Cependant, ce document s'applique au contrôle de l'angle de nutation, le volant d'inertie ayant son axe perpendiculaire à l'axe de rotation de la structure tournante.

La présente invention a pour objet un système permettant la détermination des phénomènes de résonance de corps en rotation perturbant le mouvement d'une structure tournante en raison de la dissipation d'énergie interne des corps qu'elle comporte, ce système comprenant des moyens de télécommandes pour l'entraînement sous vide de ladite structure autour de son axe IZ ainsi que des moyens de télémesure définissant les vitesses et variations d'attitude de la structure tournante caractérisé en ce que la structure est accomplée à un moteur d'entraînement d'un volant d'inertie de telle sorte que le système est placé sous la dépendance de la rotation de l'axe IZ de ladite structure tournante et de la rotation propre du moteur monté sur la structure, l'axe du moteur entraînant un volant d'inertie d'axe essentiellement parallèle à celui de la structure tournante de façon à faire varier le rapport des moments d'inertie équivalent.

L'expérience montre qu'il devient alors possible au moyen de cette double rotation de faire varier très aisément le rapport d'inertie selon des incréments extrêmement petits sans avoir à arrêter la structure tournante et à casser le vide du caisson dans lequel s'effectue l'expérience, les essais se succédant ainsi sans perte de temps appréciable à raison d'une cadence de l'ordre de 10 essais en 4 heures, le nombre des essais pouvant être très supérieur en fonction des valeurs des incréments.

Une autre caractéristique de l'invention est de tirer profit de la conservation de la masse en cours de l'expérience pour accroître l'étendue des plages de réglage du rapport d'inertie par la variation de l'emplacement des corps de la structure tournante.

Les diverses caractéristiques et avantages de l'invention apparaîtront au cours de la description suivante faite en référence aux dessins dans lesquels :

La figure 1 est une vue schématique en élévation d'un système de mise en œuvre du procédé selon l'invention,

La figure 2 la représentation schématique du contrôle du moteur d'entraînement du volant d'inertie et

La figure 3 la représentation schématique en élévation des moyens additionnels d'accroissement des plages de variation de rapport d'inertie sans variation de masse de la structure tournante.

Pour plus de clarté du dessin illustrant le procédé de l'invention et le système de mise en œuvre de ce procédé, on a représenté de façon schématique l'ensemble des éléments entrant dans la structure tournante, conforme à l'invention, mais à l'exception de tous éléments auxiliaires connus et de fonctions banales tels que support, moyens de levage, capteurs pour la mesure des vitesses, pompes de vidage de l'air contenu dans le caisson contenant la structure tournante et son système de commande, tous ces moyens connus en soi pouvant être quelconques et étant utilisés chacun pour assurer leurs fonctions habituelles.

Ainsi, la structure tournante 1 a été représentée sous la forme d'un assemblage tubulaire d'aspect conique reposant sur la bille 2, fixée à la structure tournante 1 par tout moyen approprié, table 3 par exemple, sur le palier à gaz 4. Ce palier en forme de coupelle sphérique reçoit de façon connue un gaz, par exemple l'azote, formant un film mince intercalé entre la partie inférieure de la sphère 2 et le palier 4.

Les montants d'un portique ont été schématisés en 5 pour rappeler qu'avant toute expérimentation on procède au repérage et au réglage de la position du centre de gravité de l'ensemble tournant que l'on peut situer dans l'exemple choisi à 500 μ sous le centre de la bille 2 avant de procéder à l'équilibre statique et dynamique de cette structure.

Toutes ces opérations étant connues, pouvant être accomplies par tous moyens connus, et ne constituant pas en soi une partie de l'invention proprement dite, ces divers moyens n'ont pas été représentés et ne seront pas décrits.

On s'est donc limité à représenter un socle 6 supportant le palier 4, ce socle étant à l'intérieur d'un caisson schématisé en 7 avec une vanne 8 pour rappeler que tout l'ensemble supportant la structure tournante 1 se trouve isolé de l'atmosphère par fermeture du caisson à vide puis pompage.

Enfin, l'ensemble des dispositifs de télécommandes et de télémesures utilisés pour la mise en œuvre du procédé de variation continu ou discontinu du rapport d'inertie pouvant être de tout type, on a schématisé en 9 sur la table 3 l'ensemble des dispositifs de télémesures et en 10 l'ensemble des télécommandes.

La mise en rotation de la structure 1 peut aussi s'effectuer de manière usuelle, par exemple au moyen d'un moteur télécommandé 11 supporté par la poutre 12 du portique 5 et d'un embrayage éclipsable 13. Cette mise en rotation est effectuée après avoir procédé par des opérations usuelles à la détermination de la position du centre de gravité 1 et à son réglage qui, dans l'exemple choisi, est situé de préférence à 500 μ sous le centre de la bille 2. Après l'équilibrage statique ou dynamique de la structure 1 et fermeture du caisson à vide 7 on procède au pompage avant la mise en rotation de la structure 1.

Dans le mode de réalisation choisi à titre d'exemple du système de mise en œuvre du procédé un moteur 14, d'axe 15 coïncidant avec l'axe de rotation IZ de la structure 1 est monté sur le support 16 et entraîne le volant d'inertie 17. Le moteur 14 est alimenté par la batterie 18 et est asservi par le régulateur 19. Ces deux éléments bien qu'étant montés de préférence latéralement sur la partie inférieure de la structure peuvent évidemment recevoir tous autres logements.

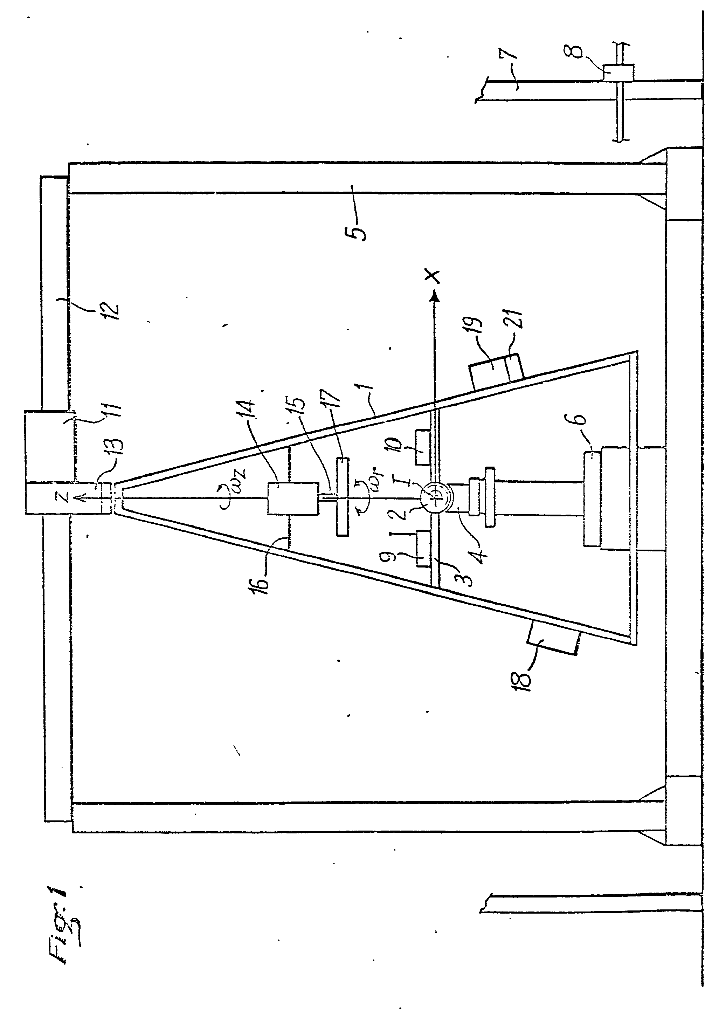

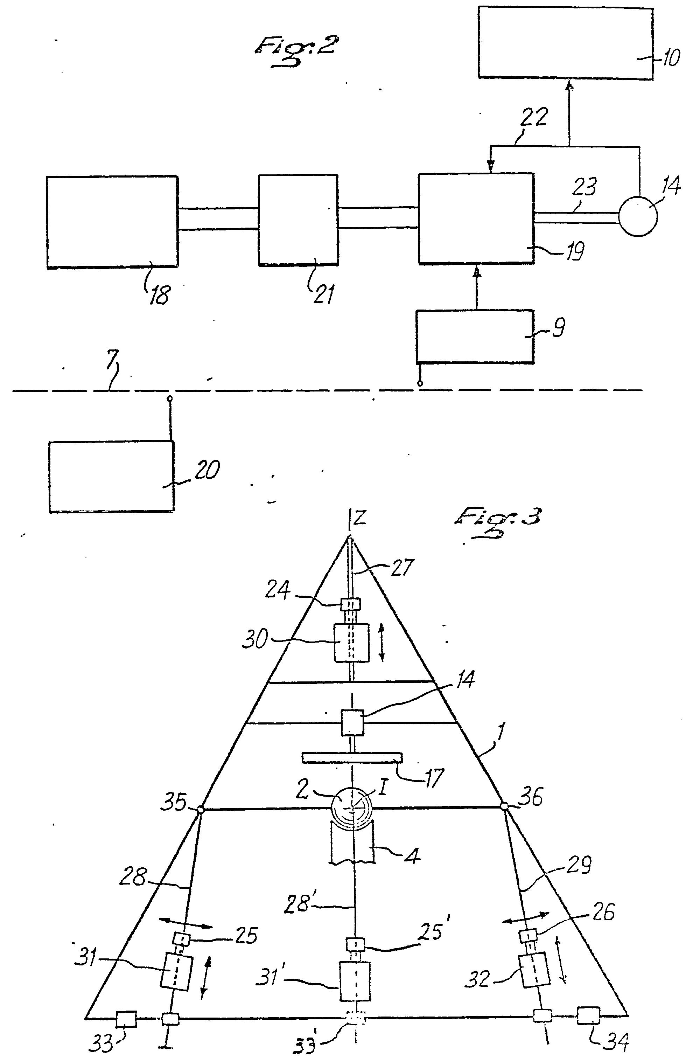

Les circuits de commande du moteur 14 ont été schématisés figure 2. Un émetteur de télécommande 20 extérieur au caisson 7, permet de transmettre toutes consignes désirées au récepteur de télécommande 9 gouvernant le régulateur 19. Celui-ci est alimenté par la batterie 18 par l'intermédiaire du dispositif de commutation 21. L'indication de la vitesse du moteur 14 est retransmise par l'émetteur de télémesure 10, le circuit de réaction 22 assurant avec la commande 23 le contrôle du moteur 14.

Il suffit donc, après avoir procédé à la mise en rotation de la structure 1 lorsque la pression à l'intérieur du caisson est descendue à une valeur de 1 Torr, de mesurer par les procédés habituels la vitesse de rotation ωz de l'axe IZ de la structure 1 et de relever les variations d'attitude du système en fonction du rapport d'inertie équivalent Iz/It + h/Itωz ou du rapport d'inertie équivalent Iz/Ix + h/Ixωz ou encore de Iz/Iy + h/Iyωz où Iz est le moment d'inertie par rapport à IZ, It le moment d'inertie par rapport à un axe quelconque du plan perpendiculaire à IZ en I, Ix et Iy les moments d'inertie par rapport aux axes principaux IX et IY perpendiculaires à IZ et h le moment cinétique relatif du volant d'inertie 17 par rapport à l'axe IZ.

Ainsi il suffit de contrôler la vitesse ωr du volant d'inertie 17 par rapport à l'axe de la structure tournante 1 et par conséquent de contrôler la vitesse du moteur 14 pour donner au moment cinétique relatif h toute nouvelle valeur les variations de nutation et d'attitude de la structure étant observées par les méthodes usuelles, sans qu'il soit nécessaire d'interrompre la rotation de la structure tournante 1 entre deux changements de valeur du moment cinétique du volant 17 par rapport à l'axe IZ, fixe par rapport à la structure 1, et par conséquent sans avoir à subir des pertes de temps de l'ordre d'une journée nécessité par tout changement de valeur du rapport d'inertie par variation de masse.

On parvient ainsi à réaliser des gains de temps considérables, chaque essai complet variant de 5 minutes à 1 h 30 suivant la valeur d'incrément, ces essais pouvant se succéder sans aucune interruption.

En outre la valeur d'incrément pouvant être de l'ordre de $10^{-3}$ on peut balayer rapidement des domaines très étroits permettant de détecter des résonances aiguës qui échappaient aux meilleures investigations selon les méthodes antérieures.

Etant donné les comportements très différents observés dans l'étude de la dynamique des corps en rotation instables avec dissipation interne d'énergie créée par le mouvement des liquides à l'intérieur des réservoirs et la difficulté de prévoir ces comportements sur le plan théorique notamment dans le cas de réservoirs de géométrie interne complexe tels que les réservoirs à rétention capillaire ou à membrane, on profite de la possibilité de faire varier le rapport d'inertie sans arrêt de la structure. Pour accroître le domaine de variation de ce rapport d'inertie on peut modifier la position, ou la position et l'attitude de divers corps comme le représente schématiquement la figure 3.

Bien que l'on ait reporté sur cette figure que la bille 2 et le moteur 14 commandant le volant 17, on comprendra que la structure 1 est toujours équipée des diverses télécommande et télémesure 9 et 10. Cependant elle comporte en outre cinq autres moyens de commande constitués par les moyens 24, 25 et 26 fixés sur les bras 27, 28 et 29 ainsi que deux moyens de commande semblables à 25 et 26 représentés partiellement en 25′ et implantés sur la structure sur les bras 28′ analogues à 28 et 29 situés à 90° et permettant de déplacer les corps 30, 31 et 32 sur ces bras ainsi que les corps tels que 31′ montés sur les deux bras représentés en 28′. Deux autres moyens de télécommande 33 et 34 fixés sur la structure 1 permettent de modifier l'inclinaison des bras 28 et 29 articulés en 35 et 36, deux autres moyens de télécommande analogues 33′ permettent de modifier les inclinaisons des deux bras représentés en 28′.

On réalise ainsi un moyen extrêmement souple et sensible permettant de mettre en évidence la non linéarité de la dissipation d'énergie des corps en rotation contenant un liquide.

Le seul paramètre significatif à explorer est donc le rapport d'inertie et indépendamment de l'angle de nutation pris par l'axe IZ, celui-ci étant consigné dans des valeurs usuelles de l'ordre par exemple de 0 à 30°. On détecte ainsi des fréquences d'excitation bien définies engendrant des phénomènes de résonance se manifestant par changement rapide de la dissipation d'énergie pour un très faible écart du rapport d'inertie avec basculement éventuel à 90° de l'axe de rotation lors de la détection d'une résonance intense.

Contrairement aux anciennes méthodes qui ne pouvaient détecter les dissipations d'énergie en raison des réactions introduites par les corrections de nutation, la présente invention est donc susceptible de détecter les résonances les plus aiguës.

Il est clair que de nombreux changements pourraient être apportés au mode de réalisation donné à titre d'exemple ainsi qu'au moyen de mise en œuvre du procédé.

C'est ainsi que l'on ne sortirait pas du cadre de l'invention en automatisant un mécanisme de déplacement du corps 30 et des corps 31, 32 ainsi que des corps 31′, 32′ montés à 90°, et de pivotement des bras 28, 29, 28′ et 29′ qui les supportent.

**Revendications**

1. Système permettant la détermination des phénomènes de résonance de corps en rotation perturbant le mouvement d'une structure tournante en raison de la dissipation d'énergie interne des corps qu'elle comporte, ce système comprenant des moyens de télécommandes pour l'entraînement sous vide de ladite structure autour de son axe IZ ainsi que des moyens de télémesure définissant les vitesses et variations d'attitude de la structure tournante, caractérisé en ce que la structure (1) est accouplée à un moteur (14) d'entraînement d'un volant d'inertie (17) de telle sorte que le système est placé sous la dépendance de la rotation de l'axe IZ de ladite structure tournante et de la rotation propre du moteur (14) monté sur la structure (1), l'axe du moteur entraînant un volant d'inertie (17) d'axe essentiellement parallèle à celui de la structure tournante (1) de façon à faire varier le rapport des moments d'inertie équivalent.

2. Système de mise en œuvre tel que revendiqué dans la revendication 1, dont le moteur (14) d'entraînement du volant d'inertie (17) est télécommandé par un organe de réception des consignes (9) contrôlant un régulateur (19) alimenté par une batterie (18) portée par la structure (1).

3. Système tel que revendiqué en 2 dont le régulateur (19) est contrôlé par un circuit de réaction (22) alimentant un émetteur de télémesure (9) monté sur la structure (1).

4. Système tel que revendiqué dans l'une quelconque des revendications 1 à 3, comportant en outre au moins un corps (30) mobile le long de l'axe IZ de la structure (1) par télécommande d'un organe d'entraînement (24).

5. Système tel que revendiqué dans l'une quelconque des revendications 1 à 4 comportant au moins deux corps (31, 32) déplaçables le long de bras (28, 29) par des organes (25, 26) télécommandés, ces bras étant en outre orientables par des organes (33, 34) télécommandés.

## Claims

1. System for determining the resonance phenomena of rotating bodies disturbing the movement of a rotating structure by virtue of the dissipation of the internal energy of the bodies which it comprises, this system comprising remote control means for the driving under vacuum of the said structure about its axis IZ and also telemetering means defining the speeds and variations of attitude of the rotating structure, characterised in that the structure (1) is coupled to a motor (14) driving an inertia flywheel (17) in such a manner that the system is placed under the dependence of the rotation of the axis IZ of the said rotating structure and the own rotation of the motor (14) mounted on the structure (1), the shaft of the motor driving an inertia flywheel (17) with an axis substantially parallel to that of the rotating structure (1) so as to cause variation of the equivalent ratio of the inertia moments.

2. Operating system as claimed in claim 1, whose motor (14) driving the inertia flywheel (17) is remote controlled by an instructions reception element (9) controlling a controller (19) supplied by a battery (18) carried by the structure (1).

3. System as claimed in 2, whereof the controller (19) is controlled by a feedback circuit (22) supplying a telemetering emitter (9) mounted on the structure (1).

4. System as claimed in any one of claims 1 to 3, also comprising at least one body (30) movable along the axis IZ if the structure (1) by remote control of a driving element (24).

5. System as claimed in any one of claims 1 to 4, comprising at least two bodies (31, 32) adapted to be displaced along arms (28, 29) by remote controlled elements (25, 26), these arms also being slewable by remote controlled elements (33, 34).

## Patentansprüche

1. System zur Bestimmung der Resonanzerscheinungen rotierender Körper, die die Bewegung einer sich drehenden Struktur aufgrund der Dissipation innerer Energie der Teile, die die Struktur enthält, stören, mit einer Fernsteuer-Einrichtung, um im luftleeren Raum die Struktur um deren Achse IZ mitzunehmen und einer Fernmess-Einrichtung, die die Geschwindigkeiten und Zustandsänderungen der Drehenden Struktur definiert, dadurch gekennzeichnet, daß die Struktur (1) derart mit einem Mitnehmer-Motor (14) für ein Schwungrad (17) gekoppelt ist, daß das System in Abhängigkeit von der Rotation der Achse IZ der drehenden Struktur und der Eigen-Rotation des auf der Struktur (1) montierten Motors (14) gesetzt bzw. gebracht wird, wobei die Achse des Motors ein Schwungrad (17) mit einer zur Achse der drehenden Struktur (1) im wesentlichen parallelen Achse derart mitnimmt, daß das Äquivalenz-Trägheitsmomenten-Verhältnis verändert wird.

2. System nach Anspruch 1, bei dem der Mitnehmer-Motor (14) für das Schwungrad (17) durch ein Befehlssignal-Aufnahmeorgan (9) ferngesteuert ist, das einen regler (19) steuert, der durch eine von der Struktur (1) getragene Batterie (18) gespeist wird.

3. System nach Anspruch 2, bei dem der regler (19) durch einen Reaktions- bzw. Rückkopplungskreis (22) gesteuert wird, der einen auf der Struktur (1) montierten Fernmessungs-Sender (10) versorgt.

4. System nach einem der Ansprüche 1 bis 3, das ferner zumindest einen Körper (30) aufweist, der durch Fernsteuerung eines Mitnehmerorgans (24) längs der Achse IZ der Struktur (1) bewegbar ist.

5. System nach einem der Ansprüche 1 bis 4, das zumindest zwei durch ferngesteuerte Organe (25, 26) entlang von Armen (28, 29) verschiebbare Körper (31, 32) aufweist, wobei die Arme ihrerseits durch ferngesteuerte Organe (33, 34) ausrichtbar sind.

Fig:1

0 057 138

*Fig:2*

*Fig:3*